# FASCICULE DE BREVET EUROPEEN

(11) **EP 2 901 698 B1**
(45) Date de publication et mention de la délivrance du brevet: **30.12.2020**
(21) Numéro de dépôt: 13789595.9
(22) Date de dépôt: 16.09.2013
(51) Int. Cl.: H04N 19/573, H04N 19/105, H04N 19/172, H04N 19/137

(54) **PROCÉDÉ DE CODAGE ET DÉCODAGE D'IMAGES, DISPOSITIF DE CODAGE ET DÉCODAGE ET PROGRAMMES D'ORDINATEUR CORRESPONDANTS**
VERFAHREN ZUR CODIERUNG UND DECODIERUNG VON BILDERN, CODIERUNGS- UND DECODIERUNGSVORRICHTUNG UND DAMIT ZUSAMMENHÄNGENDE COMPUTERPROGRAMME
METHOD OF CODING AND DECODING IMAGES, CODING AND DECODING DEVICE AND COMPUTER PROGRAMS CORRESPONDING THERETO

(30) Priorité: 27.09.2012 FR 1259110
(43) Date de publication de la demande: 05.08.2015
(73) Titulaire: ORANGE, 75015 Paris (FR)
(72) Inventeur: HENRY, Félix, 35700 Rennes (FR)
(86) Numéro de dépôt international: PCT/FR2013/052117
(87) Numéro de publication internationale: WO 2014/049224

(56) Documents cités:
- EP-A1- 2 445 216
- WO-A2-2007/011851
- US-A1- 2010 246 680
- ALEXIS M TOURAPIS ET AL: "Direct macroblock coding for predictive (P) pictures in the H.264 standard", VISUAL COMMUNICATIONS AND IMAGE PROCESSING; 20-1-2004 - 20-1-2004; SAN JOSE,, 20 janvier 2004 (2004-01-20), XP030081301,
- GIROD B ET AL: "Affine Multipicture Motion-Compensated Prediction", IEEE TRANSACTIONS ON CIRCUITS AND SYSTEMS FOR VIDEO TECHNOLOGY, IEEE SERVICE CENTER, PISCATAWAY, NJ, US, vol. 15, no. 2, 1 février 2005 (2005-02-01), pages 197-209, XP011126403, ISSN: 1051-8215, DOI: 10.1109/TCSVT.2004.841690
- SRINIVASAN S ET AL: "Windows Media Video 9: overview and applications", SIGNAL PROCESSING. IMAGE COMMUNICATION, ELSEVIER SCIENCE PUBLISHERS, AMSTERDAM, NL, vol. 19, no. 9, 1 octobre 2004 (2004-10-01), pages 851-875, XP004607151, ISSN: 0923-5965, DOI: 10.1016/J.IMAGE.2004.06.005
- PARK S ET AL: "TE3: Motion compensation with adaptive warped reference", 3. JCT-VC MEETING; 94. MPEG MEETING; 7-10-2010 - 15-10-2010;GUANGZHOU; (JOINT COLLABORATIVE TEAM ON VIDEO CODING OF ISO/IECJTC1/SC29/WG11 AND ITU-T SG.16 ); URL: HTTP://WFTP3.ITU.INT/AV-ARCH/JCTVC-SITE/,, no. JCTVC-C033, 1 octobre 2010 (2010-10-01), XP030007740, ISSN: 0000-0045

## Description

### Domaine de l'invention

La présente invention se rapporte de manière générale au domaine du traitement d'images, et plus précisément au codage et au décodage d'images numériques et de séquences d'images numériques.

L'invention peut ainsi notamment s'appliquer au codage vidéo mis en œuvre dans les codeurs vidéo actuels (MPEG, H.264, etc) ou à venir ITU-T/VCEG (HEVC) ou ISO/MPEG (HVC).

### Arrière-plan de l'invention

La norme HEVC telle que décrite dans le document « Joint Collaborative Team on Video Coding (JCT-VC) of ITU-T SG16 WP3 and ISO/IEC JTC1/SC29/WG11 10th Meeting: Stockholm, SE, 11-20 July, 2012 » est similaire à la norme précédente H.264, en ce sens qu'elle peut utiliser une représentation par blocs de la séquence vidéo.

Comme dans la norme H.264, la norme HEVC précitée met en œuvre une prédiction de pixels d'une image courante par rapport à d'autres pixels appartenant soit à la même image (prédiction intra), soit à une ou plusieurs images précédentes de la séquence (prédiction inter) qui ont déjà été décodées. De telles images précédentes sont appelées classiquement images de référence et sont conservées en mémoire aussi bien au codeur qu'au décodeur. La prédiction Inter est appelée couramment prédiction à compensation de mouvement.

Pour ce faire, les images sont découpées en macroblocs, qui sont ensuite subdivisés en blocs, constitués de pixels. Chaque bloc ou macrobloc est codé par prédiction intra ou inter images.

Classiquement, le codage d'un bloc courant est réalisé à l'aide d'une prédiction du bloc courant, délivrant un bloc prédit, et d'un résidu de prédiction, correspondant à une différence entre le bloc courant et le bloc prédit. Ce résidu de prédiction, encore appelé bloc résiduel, est transmis au décodeur, qui reconstruit le bloc courant en ajoutant ce bloc résiduel à la prédiction.

La prédiction du bloc courant est établie à l'aide d'informations déjà reconstruites. Dans le cas de la prédiction Inter, de telles informations consistent notamment en au moins un bloc de prédiction, c'est-à-dire un bloc d'une image de référence qui a été préalablement codé puis décodé. Un tel bloc de prédiction est spécifié par :
- l'image de référence à laquelle il appartient,
- le vecteur de déplacement qui décrit le mouvement entre le bloc courant et le bloc de prédiction.

Le bloc résiduel obtenu est alors transformé, par exemple en utilisant une transformée de type DCT (transformée en cosinus discrète). Les coefficients du bloc résiduel transformé sont alors quantifiés, puis codés par un codage entropique.

Le décodage est fait image par image, et pour chaque image, bloc par bloc ou macrobloc par macrobloc. Pour chaque (macro)bloc, les éléments correspondants du flux sont lus. La quantification inverse et la transformation inverse des coefficients du(des) bloc(s) résiduel(s) associé(s) au (macro)bloc sont effectuées. Puis, la prédiction du (macro)bloc est calculée et le (macro)bloc est reconstruit en ajoutant la prédiction au(x) bloc(s) résiduel(s) décodé(s).

Selon cette technique de compression, on transmet donc des blocs résiduels transformés, quantifiés, puis codés, au décodeur, pour lui permettre de reconstruire la ou les image(s) décodées.

Lors de la prédiction Inter, il peut arriver que les images de référence utilisées pour coder ou décoder l'image courante ne soient pas très ressemblantes, en termes de texture et de rendu du mouvement, à l'image courante. La précision de la prédiction Inter de l'image courante est alors de mauvaise qualité, ce qui nuit aux performances de codage en Inter de l'image courante.

Le document US2010/246680 A1 décrit un codeur vidéo comprenant un prédicteur d'images de référence. Selon un mode de réalisation, le prédicteur utilise une analyse de flux optique entre des images précédemment décodées et la précédente image courante décodée. Les paramètres de mouvement déterminés sont ensuite appliqués à la précédente image courante décodée pour déterminer de nouvelles images de référence.

Cependant ce prédicteur peut être amélioré pour que les nouvelles les images de référence ressemblent davantage à l'image courante.

### Objet et résumé de l'invention

Un des buts de l'invention est de remédier à des inconvénients de l'état de la technique précité.

A cet effet, un objet de la présente invention concerne un procédé de codage et de décodage d'au moins une image courante.

Un mode de réalisation, dit alternatif, est détaillé à l'appui de la revendication indépendante 1 et de ses dépendantes pour le procédé de codage, de la revendication indépendante 7 et de ses dépendantes pour le décodage.

D'autres modes de réalisation sont fournis à titre d'exemple.

Un tel procédé de codage est remarquable en ce qu'il comprend les étapes de :
- détermination d'au moins un paramètre d'une fonction paramétrique prédéterminée, ladite fonction étant apte à transformer les images d'un premier sous-ensemble d'un ensemble d'images de référence préalablement décodées en une approximation des images d'un deuxième sous-ensemble d'images dudit ensemble d'images de référence,
   - application de ladite fonction selon le paramètre déterminé à un troisième sous-ensemble dudit ensemble d'images de référence, ledit troisième sous-ensemble étant différent dudit premier sous-ensemble, pour obtenir un autre ensemble d'images de référence préalablement décodées,
   - codage de l'image courante à partir dudit ensemble d'images de référence obtenu,
où, pour au moins une image à coder :
- lesdits premier et second sous-ensembles comprennent respectivement deux images de référence,
- ledit troisième sous-ensemble comprend les deux images de référence qui sont temporellement les plus proches de l'image courante,
- et ledit autre ensemble d'images de référence obtenu comprend deux images de référence.

Une telle disposition a pour avantage de coder l'image courante à partir d'images de référence qui soient plus ressemblantes à l'image courante que les images de référence disponibles au codage et utilisées classiquement pour le codage de l'image courante. Il en résulte ainsi une meilleure précision de la prédiction de mouvement de l'image courante, et donc un codage en Inter de cette dernière beaucoup plus fin.

L'utilisation d'images de référence qui sont temporellement les plus proches de l'image courante permet d'appliquer la fonction paramétrique à des images de référence qui ont la probabilité la plus élevée d'être les plus ressemblantes possibles à l'image courante, en termes de texture et de mouvement. Il en résulte une optimisation de la précision de la prédiction de l'image courante et de meilleures performances de compression de cette dernière.

L'invention concerne également un dispositif de codage d'au moins une image courante destiné à mettre en œuvre le procédé de codage précité.

L'invention concerne également un dispositif de décodage d'au moins une image courante destiné à mettre en œuvre le procédé de décodage précité.

L'invention concerne encore un programme d'ordinateur comportant des instructions pour mettre en œuvre le procédé de codage ou le procédé de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Le dispositif de codage et le programme d'ordinateur correspondant précités présentent au moins les mêmes avantages que ceux conférés par le procédé de codage selon la présente invention.

Le dispositif de décodage, le programme d'ordinateur et le support d'enregistrement correspondants précités présentent au moins les mêmes avantages que ceux conférés par le procédé de décodage selon la présente invention.

### Brève description des dessins

D'autres caractéristiques et avantages apparaîtront à la lecture de modes de réalisation préférés décrits en référence aux figures dans lesquelles:
- la figure 1 représente des étapes du procédé de codage selon l'invention,
- la figure 2 représente un mode de réalisation d'un dispositif de codage selon l'invention,
- la figure 3A représente un exemple de détermination d'au moins un paramètre p' d'une fonction prédéterminée Fp apte à transformer un premier sous-ensemble d'un ensemble d'images de référence en une approximation d'un deuxième sous-ensemble dudit ensemble d'images de référence,
- la figure 3B représente un exemple d'application de la fonction prédéterminée F_{P} selon le paramètre p' à un troisième sous-ensemble dudit ensemble d'images de référence,
- la figure 4 représente des sous-étapes de codage mises en œuvre dans le procédé de codage de la figure 1,
- la figure 5 représente un mode de réalisation d'un module de codage apte à mettre en œuvre les sous-étapes de codage représentées à la figure 4,
- la figure 6 représente des étapes du procédé de décodage selon l'invention,
- la figure 7 représente un mode de réalisation d'un dispositif de décodage selon l'invention,
- la figure 8 représente des sous-étapes de décodage mises en œuvre dans le procédé de décodage de la figure 6,
- la figure 9 représente un mode de réalisation d'un module de décodage apte à mettre en œuvre les sous-étapes de décodage représentées à la figure 8.

### Description détaillée du procédé de codage de l'invention

Un mode de réalisation de l'invention va maintenant être décrit, dans lequel le procédé de codage selon l'invention est utilisé pour coder une image ou une séquence d'images selon un flux binaire proche de celui qu'on obtient par un codage conforme par exemple à la norme en cours d'élaboration HEVC.

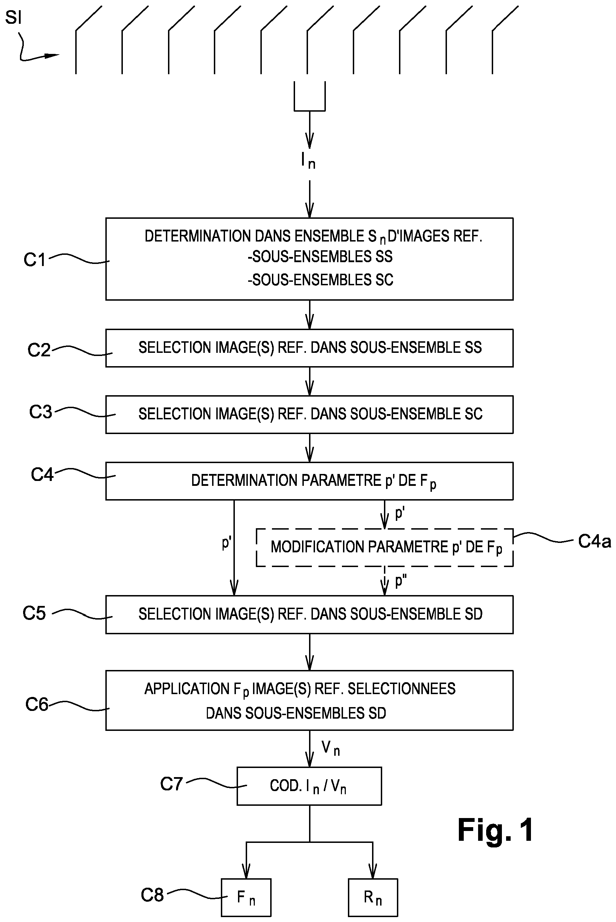

Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C8 telles que représentées à la **figure 1****.**

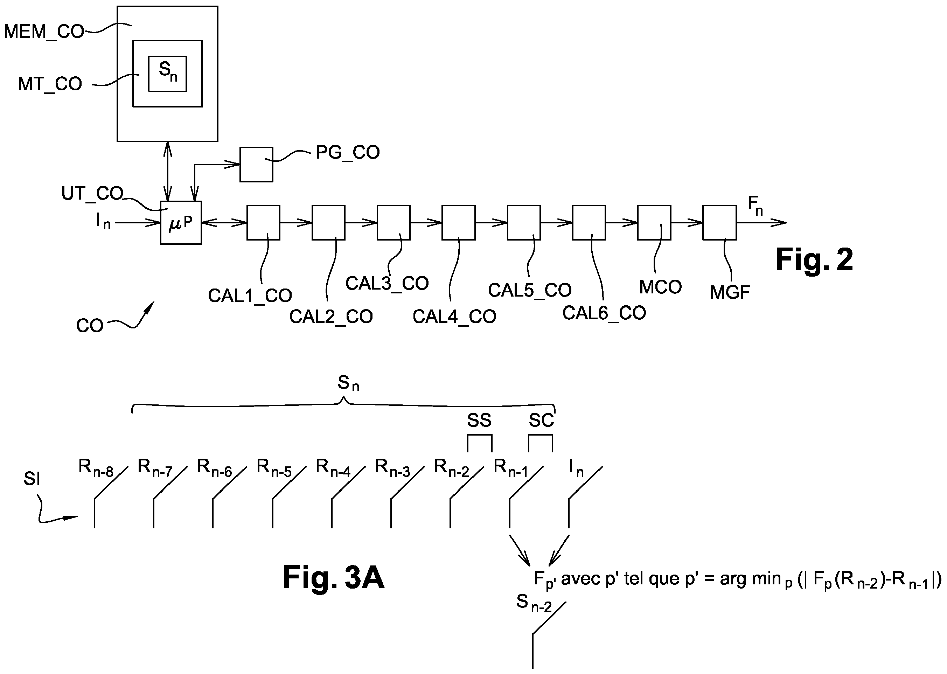

Selon le mode de réalisation de l'invention, le procédé de codage selon l'invention est implémenté dans un dispositif de codage CO représenté à la **figure 2****.**

Comme illustré en **figure 2****,** un tel dispositif de codage comprend une mémoire MEM_CO comprenant une mémoire tampon MT_CO, une unité de traitement UT_CO équipée par exemple d'un microprocesseur µP et pilotée par un programme d'ordinateur PG_CO qui met en œuvre le procédé de codage selon l'invention. A l'initialisation, les instructions de code du programme d'ordinateur PG_CO sont par exemple chargées dans une mémoire RAM avant d'être exécutées par le processeur de l'unité de traitement UT_CO.

Le procédé de codage représenté sur la **figure 1** s'applique à toute image courante d'une séquence SI d'images à coder.

A cet effet, une image courante Iₙ est considérée dans la séquence d'images SI. A ce stade, un ensemble Sₙ d'images de référence Rₙ₋₁, Rₙ₋₂,.... R_{n-M} est disponible dans la mémoire tampon MT_CO du codeur CO, comme représenté sur la **figure 2****.** M est une variable entière qui représente le nombre d'images de référence disponibles. En effet, du fait que les ressources de la mémoire tampon MT_CO sont limitées, ce n'est généralement pas la totalité des images de référence de l'ensemble Sₙ qui sont disponibles, mais les M images de référence dernièrement codées puis décodées. Dans l'exemple représenté, M=8.

La **figure 3A** illustre la succession desdites M images de référence par rapport à l'image courante Iₙ à coder, où Rₙ₋₈ est l'image de référence la plus éloignée temporellement de l'image courante Iₙ et où Rₙ₋₁ est l'image de référence la plus proche temporellement de l'image courante.

De façon connue en tant que telle, de telles images de référence sont des images de la séquence SI qui ont été préalablement codées puis décodées. Dans le cas du codage en Inter selon la norme HEVC, l'image courante Iₙ est codée à partir d'une ou de plusieurs desdites images de référence.

Conformément à l'invention, lorsqu'une image courante est codée en Inter, une ou plusieurs desdites images de référence vont être transformées préalablement au codage en Inter de l'image courante, dans le but d'obtenir respectivement une ou plusieurs images de référence transformées qui soient le plus ressemblantes possible à l'image courante en termes de texture et de mouvement.

En référence à la **figure 1****,** il est procédé, au cours d'une étape C1, à la détermination d'un premier sous-ensemble SS d'images de référence, ainsi que d'un deuxième sous-ensemble SC d'images de référence.

Selon un mode de réalisation préféré, les premier et deuxième sous-ensembles contiennent respectivement une image de référence.

Selon un mode alternatif de réalisation, les premier et deuxième sous-ensembles contiennent respectivement deux images de référence.

Bien entendu, le nombre d'images de référence déterminé dans chacun des premier et deuxième sous-ensembles est spécifique pour chaque image courante à coder et peut être différent.

En référence à la **figure 2****,** ladite étape de détermination C1 est mise en œuvre par un module de calcul CAL1_CO du codeur CO, lequel module est piloté par le microprocesseur µP de l'unité de traitement UT_CO.

En référence à la **figure 1****,** il est procédé, au cours d'une étape C2, à la sélection d'au moins une image de référence dans le premier sous-ensemble SS d'images de référence déterminé à l'étape C1.

Selon un mode de réalisation préféré et comme représenté sur la **figure 3A****,** l'image de référence Rₙ₋₂ est sélectionnée.

Selon un mode alternatif de réalisation, les images de référence Rₙ₋₃ et Rₙ₋₄ sont sélectionnées.

En référence à la **figure 2****,** ladite étape de sélection C2 est mise en œuvre par un module de calcul CAL2_CO du codeur CO, lequel module est piloté par le microprocesseur µP de l'unité de traitement UT_CO.

En référence à la **figure 1****,** il est procédé, au cours d'une étape C3, à la sélection d'au moins une image de référence dans le deuxième sous-ensemble SC d'images de référence déterminé à l'étape C1.

Selon un mode de réalisation préféré et comme représenté sur la **figure 3A****,** l'image de référence Rₙ₋₁ est sélectionnée.

Selon un mode alternatif de réalisation, les images de référence Rₙ₋₂ et Rₙ₋₁ sont sélectionnées.

En référence à la **figure 2****,** ladite étape de sélection C3 est mise en œuvre par un module de calcul CAL3_CO du codeur CO, lequel module est piloté par le microprocesseur µP de l'unité de traitement UT_CO.

En référence à la **figure 1****,** il est procédé, au cours d'une étape C4, à la détermination d'au moins un paramètre p' d'une fonction paramétrique F_{P} prédéterminée qui est adaptée pour transformer un nombre N_{S} d'images de référence sélectionnées dans le premier sous-ensemble SS en une approximation d'un nombre N_{C} d'images de référence sélectionnées dans le deuxième sous-ensemble SC.

En référence à la **figure 2****,** ladite étape de détermination C4 est mise en œuvre par un module de calcul CAL4_CO du codeur CO, lequel module est piloté par le microprocesseur µP de l'unité de traitement UT_CO.

Une telle approximation est réalisée par maximisation d'un critère de ressemblance prédéterminé entre au moins une image du premier sous-ensemble SS d'images de référence et au moins une image de référence du deuxième sous-ensemble SC d'images de référence.

Selon un mode de réalisation préféré, l'approximation est réalisée par maximisation d'un critère de ressemblance prédéterminé entre l'image sélectionnée Rₙ₋₂ du premier sous-ensemble SS d'images de référence et l'image sélectionnée Rₙ₋₁ du deuxième sous-ensemble SC d'images de référence.

Selon un mode alternatif de réalisation, l'approximation est réalisée par maximisation d'un critère de ressemblance prédéterminé entre les deux images sélectionnées Rₙ₋₃ et Rₙ₋₄ du premier sous-ensemble SS d'images de référence et respectivement les deux images sélectionnées Rₙ₋₂ et Rₙ₋₁ du deuxième sous-ensemble SC d'images de référence.

Dans le mode préféré de réalisation, une valeur de paramètre p' est déterminée de façon à ce que l'image F_{P'}(Rₙ₋₂) soit la meilleure approximation possible de l'image Rₙ₋₁, c'est-à-dire par minimisation de ∥F_{P}(Rₙ₋₂) - Rₙ₋₁∥. La notation ∥F_{P}(Rₙ₋₂) - Rₙ₋₁∥ représente une norme bien connue en soi, telle que la norme L2, L1, norme sup, dont des exemples sont donnés ci-dessous.

L'approximation est effectuée selon un critère de ressemblance prédéterminé qui consiste par exemple à déterminer, selon la norme L2, la valeur de P qui minimise l'erreur quadratique (en anglais : « Sum of Squared Différences ») :
- entre chaque premier pixel de l'image F_{P}(Rₙ₋₂), et de l'image Rₙ₋₁,
- puis entre chaque deuxième pixel de l'image F_{P}(Rₙ₋₂), et de l'image Rₙ₋₁, et ainsi de suite jusqu'au dernier pixel de chacune desdites deux images considérées.

Comme représenté sur la **figure 3A****,** conformément au mode préféré de réalisation, une image intermédiaire Sₙ₋₁ telle que Sₙ₋₁ = F_{p'}(Rₙ₋₂) est alors obtenue et précède temporellement immédiatement l'image courante Iₙ.

Dans d'autres modes de réalisation, la minimisation ne fournit pas obligatoirement une ou plusieurs images intermédiaires.

Selon une première variante, l'approximation est effectuée selon un critère de ressemblance prédéterminé qui consiste par exemple à déterminer, selon la norme L1, la valeur de P qui minimise l'erreur absolue (en anglais : « Sum of Absolute Différences ») :
- entre chaque premier pixel de l'image F_{P}(Rₙ₋₂), et de l'image Rₙ₋₁,
- puis entre chaque deuxième pixel de l'image F_{P}(Rₙ₋₂), et de l'image Rₙ₋₁, et ainsi de suite jusqu'au dernier pixel de chacune desdites deux images considérées.

Selon une deuxième variante, l'approximation est effectuée selon un critère de ressemblance prédéterminé qui consiste par exemple à minimiser une fonction générale dépendant des pixels de chacune des images F_{P}(Rₙ₋₂) et Rₙ₋₁.

La fonction paramétrique F_{P} peut prendre différentes formes dont des exemples non exhaustifs sont donnés ci-dessous.

Selon un premier exemple, la fonction paramétrique F_{P} est une fonction qui associe à une image X constituée d'une pluralité de pixels x_{i,j} (1≤i≤Q et 1≤j≤R), où Q et R sont des entiers, une image Y constituée d'une pluralité de pixels y_{i,j}, selon la relation suivante :
y_{i,j} = Ax_{i,j}+B, où p'={A,B} où A et B sont des nombres réels.

Les paramètres A et B sont optimisés par des approches classiques, telles que la recherche exhaustive, l'algorithme génétique, etc....

La recherche exhaustive consiste à ce que les paramètres A et B prennent leurs valeurs respectives dans un ensemble prédéterminé. Par exemple, les valeurs du paramètre A appartiennent à l'ensemble de valeurs prédéterminé {0.98, 0.99, 1.0, 1.01, 1.02} et les valeurs du paramètre B appartiennent à l'ensemble de valeurs prédéterminé {-2, -1, 0, 1, 2}. Toutes les combinaisons de valeur possible sont alors testées et celle qui optimise le critère de ressemblance est conservée.

Des méthodes d'optimisation discrète connues en soi peuvent également être utilisées pour éviter d'explorer toutes les combinaisons, ce qui est coûteux en calculs. Un exemple d'une telle méthode d'optimisation est l'algorithme génétique bien connu en soi et décrit à l'adresse Internet suivante :
http://fr.wikipedia.org/w/index.php?title=Algorithme g%C3%A9n%C3%A9tique &oldid=83138231.

Selon un deuxième exemple, la fonction paramétrique F_{P} est une compensation en mouvement. Dans ce cas, l'image Y est alors constituée de plusieurs blocs qui ont été codés à l'aide d'une prédiction à compensation de mouvement avec des blocs issus de l'image X. Pour un bloc considéré de l'image Y est associé un vecteur mouvement qui décrit le mouvement entre un bloc correspondant dans l'image X et le bloc considéré dans l'image Y. L'ensemble des vecteurs de mouvement forment une pluralité de paramètres p' de la fonction F_{P}.

Supposons selon ce deuxième exemple que l'image Y soit l'image Rₙ₋₁ du deuxième sous-ensemble SC et que l'image X soit l'image Rₙ₋₂ du premier sous-ensemble SS. L'approximation est effectuée selon un critère de ressemblance prédéterminé qui consiste à découper l'image Rₙ₋₁ en plusieurs blocs, puis à déterminer pour un bloc considéré dans l'image Rₙ₋₁ quel est, dans l'image Rₙ₋₂, le bloc le plus ressemblant en termes de texture et de mouvement. Le vecteur mouvement associé audit bloc le plus ressemblant est alors inclus dans les paramètres p'.

Selon un troisième exemple, la fonction paramétrique F_{P} est un filtre de Wiener qui est bien connu en soi et qui est par exemple décrit à l'adresse Internet http://fr.wikipedia.org/wiki/D%C3%A9convolution de Wiener.

L'approximation est effectuée selon un critère de ressemblance prédéterminé qui consiste, pour un support de filtre donné, à déterminer le filtre de Wiener qui filtre l'image Rₙ₋₂ de façon à obtenir la meilleure ressemblance possible avec l'image Rₙ₋₁. Les coefficients du filtre de Wiener déterminé forment alors la pluralité de paramètres p'.

Selon un quatrième exemple, la fonction paramétrique F_{P} peut aussi être une combinaison des fonctions paramétriques précitées. Dans ce cas, l'image Y peut être découpée en une pluralité de zones obtenues par exemple à l'aide d'une segmentation qui est fonction de certains critères (critère de distorsion, critère d'homogénéité de la zone en fonction de certaines caractéristiques telles que l'énergie locale du signal vidéo). Chaque zone de l'image Y peut alors être approximée selon l'un des exemples décrits ci-dessus. Une première zone de l'image Y est par exemple approximée à l'aide d'un filtrage de Wiener. Une deuxième zone de l'image Y est par exemple approximée à l'aide d'une compensation en mouvement. Une troisième zone de l'image Y, si elle présente un contraste peu élevé, utilise par exemple la fonction identité, c'est-à-dire n'est pas approximée, etc... Les différents paramètres p' de la fonction paramétrique F_{P} sont alors constitués de l'information de segmentation et des paramètres associés à chaque zone segmentée de l'image Y.

Dans le mode alternatif de réalisation où deux images de référence Rₙ₋₄ et Rₙ₋₃ et Rₙ₋₂ et Rₙ₋₁ sont sélectionnées respectivement dans les premier et deuxième sous-ensembles SS et SC, la fonction paramétrique se présente sous la forme d'une fonction multidimensionnelle FA_{T} tel que FA_{T}(Rₙ₋₄, Rₙ₋₃)=(Rₙ₋₂,Rₙ₋₁) qui associe les deux images de référence Rₙ₋₄,Rₙ₋₃ respectivement aux deux images de référence Rₙ₋₂,Rₙ₋₁. Dans ce mode alternatif, on considère par exemple que FA_{T}(Rₙ₋₄,Rₙ₋₃)=(F_{T1}(Rₙ₋₄),F_{T2}(Rₙ₋₃)) où F est la même fonction que la fonction paramétrique F_{P} précitée qui a été décrite dans le mode préféré de réalisation.

Conformément au mode de réalisation alternatif, il est procédé à la détermination d'au moins une valeur de paramètre p" du paramètre T. La valeur p" est la réunion de deux valeurs p1 et p2, où p1 et p2 sont respectivement les valeurs optimales des paramètres T1 et T2 quand il est procédé à l'approximation de Rₙ₋₂ par FT₁(Rₙ₋₄) et Rₙ₋₁ par FT₂(Rₙ₋₃).

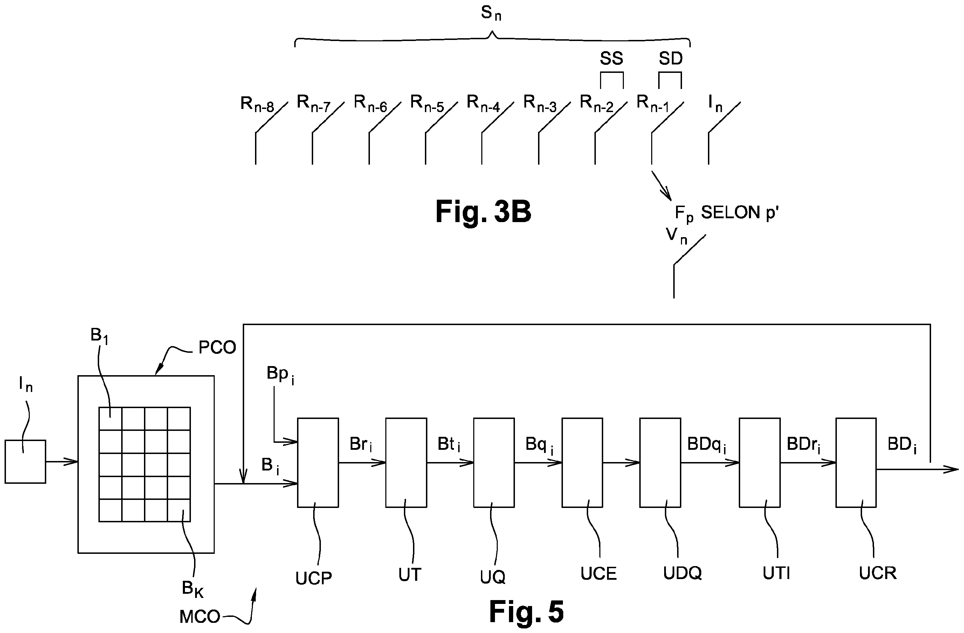

En référence à la **figure 1****,** il est procédé, au cours d'une étape C5, à la sélection d'une ou de plusieurs images de référence sur la ou lesquelles appliquer la fonction F_{P} pour obtenir une ou plusieurs nouvelles images de référence. Comme représenté sur la **figure 3B****,** une telle sélection est mise en œuvre dans un troisième sous-ensemble SD de l'ensemble Sₙ d'images de référence, ledit troisième sous-ensemble SD étant différent du premier sous-ensemble SS et contenant une ou plusieurs images de référence qui sont temporellement les plus proches de l'image courante Iₙ.

Dans le mode préféré de réalisation représenté à la **figure 3B****,** l'image de référence sélectionnée dans le sous-ensemble SD est l'image Rₙ₋₁.

Dans le mode alternatif de réalisation, les images sélectionnées dans le sous-ensemble SD sont les images Rₙ₋₁ et Rₙ₋₂.

D'une façon générale, le troisième sous-ensemble SD contient au moins une des images du deuxième sous-ensemble SC. D'une façon plus particulière, les images sélectionnées dans ce troisième sous-ensemble sont des images décalées temporellement de +1 par rapport aux images du premier sous-ensemble SS.

Ainsi, dans le mode préféré de réalisation représenté sur la **figure 3B****,** l'image Rₙ₋₁ dans le troisième sous-ensemble SD suit temporellement immédiatement l'image Rₙ₋₂ du premier sous-ensemble SS. Dans le mode alternatif de réalisation, les images Rₙ₋₂ et Rₙ₋₁ sélectionnées dans le troisième sous-ensemble SD suivent temporellement immédiatement les images Rₙ₋₄ et Rₙ₋₃ contenues dans le premier sous-ensemble SS d'images de référence.

En référence à la **figure 2****,** l'étape de sélection C5 précitée st mise en œuvre par un module de calcul CAL5_CO du codeur CO, lequel module est piloté par le microprocesseur µP de l'unité de traitement UT_CO.

En référence à la **figure 1****,** il est procédé, au cours d'une étape C6, à l'application à ou aux images sélectionnées dans le troisième sous-ensemble SD, de la fonction F_{P} selon le paramètre p' déterminé à l'étape C4. A l'issue de cette étape C6, une ou plusieurs nouvelles images de référence sont obtenues.

Selon le mode préféré de réalisation, une nouvelle image de référence Vₙ est obtenue telle que Vₙ= F_{P}(Rₙ₋₁) selon le paramètre p'.

Selon le mode alternatif de réalisation, les nouvelles images de référence Vₙ₋₁ et Vₙ sont obtenues telles (Vₙ₋₁, Vₙ)=FA_{T}(Rₙ₋₂, Rₙ₋₁) selon le paramètre p".

En référence à la **figure 2****,** l'étape d'application C6 est mise en œuvre par un module de calcul CAL6_CO du codeur CO, lequel module est piloté par le microprocesseur µP de l'unité de traitement UT_CO.

En référence à la **figure 1****,** il est procédé, au cours d'une étape C7, au codage de l'image courante Iₙ à partir de la ou des nouvelles images de référence obtenues à l'issue de l'étape C6.

En référence à la **figure 2****,** l'étape de codage C7 est mise en œuvre par un module de codage MCO du codeur CO, lequel module est piloté par le microprocesseur µP de l'unité de traitement UT_CO. Le module MCO sera décrit plus loin dans la description.

En référence à la **figure 1****,** il est procédé, au cours d'une étape C8, à la production d'un flux de bits Fₙ représentant l'image courante Iₙ codée par le module de codage MCO précité, ainsi qu'une version décodée Rₙ de l'image courante Iₙ susceptible d'être réutilisée en tant qu'image de référence dans l'ensemble Sₙ d'images de référence conformément au procédé de codage selon l'invention.

En référence à la **figure 2****,** l'étape de production C8 d'un flux courant Fₙ est mise en œuvre par un module MGF de génération de flux qui est adapté à produire des flux de données, telles que des bits par exemple. Ledit module MGF est piloté par le microprocesseur µP de l'unité de traitement UT_CO.

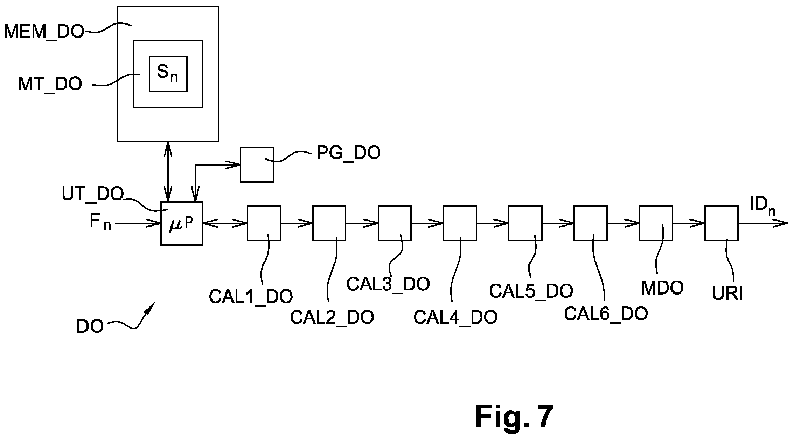

Le flux courant Fₙ est ensuite transmis par un réseau de communication (non représenté), à un terminal distant. Celui-ci comporte un décodeur DO représenté à la **figure 7** qui sera décrit plus en détail dans la suite de la description.

En référence à la **figure 1****,** au cours d'une étape optionnelle de codage C4a représentée en pointillé sur la **figure 1****,** il est procédé à la modification du paramètre p' déterminé à l'étape C4 précitée en un autre paramètre p'" pour tenir compte des images auxquelles il s'applique. A cet effet, le paramètre p'" est calculé préalablement à partir du paramètre p' déterminé. Une telle étape est particulièrement utile par exemple dans le cas où la fonction F_{P} est une simple diminution de la luminance globale de l'image, c'est à dire un « fondu vers le noir ». En observant par exemple la succession d'images de référence Rₙ₋₄, Rₙ₋₃, Rₙ₋₂ et Rₙ₋₁, il peut être observé par exemple que le décalage vers le noir s'effectue avec la valeur -10 entre Rₙ₋₄ et Rₙ₋₃, la valeur -9 entre Rₙ₋₃ et Rₙ₋₂, la valeur -8 entre Rₙ₋₂ et Rₙ₋₁. Il s'agit ainsi d'un fondu vers le noir à vitesse variable. Dans la mesure où à l'issue de l'étape C6 d'application de la fonction F_{P}, la nouvelle image de référence obtenue est située à l'instant temporel suivant l'instant temporel où est située l'image de référence à laquelle est appliquée la fonction F_{P}, c'est-à-dire à l'instant temporel de l'image Iₙ, il convient d'adapter la valeur de paramètre p' de façon à ce que la valeur de décalage en luminance soit égale à -7, c'est-à-dire la valeur de décalage entre l'image de référence Rₙ₋₁ et l'image courante Iₙ.

Dans le mode de réalisation préféré où la fonction paramétrique F_{P} est appliquée à l'image de référence Rₙ₋₁, avec p"'=-7 au lieu de p'=-8, la nouvelle image de référence Vₙ obtenue aura ainsi une probabilité plus élevée de ressembler davantage à l'image courante Iₙ en termes de texture et de mouvement.

Dans le cas où l'étape de modification C4a est mise en œuvre, l'étape C6 d'application de la fonction paramétrique F_{P} est mise en œuvre selon ledit paramètre p'''.

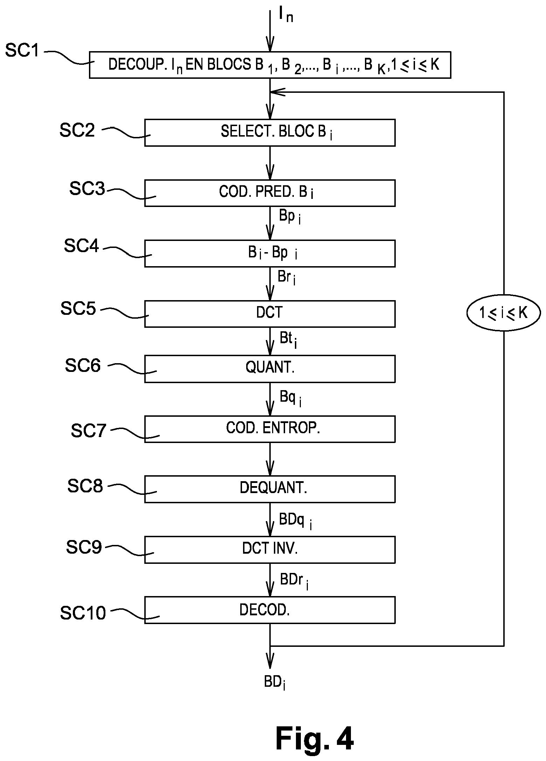

On va maintenant décrire, en référence à la **figure 4****,** les sous-étapes spécifiques de l'étape de codage C7 de l'image courante Iₙ. De telles sous-étapes spécifiques sont mises en œuvre par le module de codage MCO de la **figure 2** qui est décrit plus en détail à la **figure 5****.**

En référence à la **figure 4****,** la première sous-étape SC1 est le découpage de l'image courante Iₙ en une pluralité de blocs B₁, B₂,...,Bᵢ, ...,B_{K}, avec 1≤i≤K. Dans l'exemple représenté, K=16. Un macrobloc est classiquement un bloc ayant une taille maximale prédéterminée. Un tel macrobloc peut par ailleurs être lui-même découpé en blocs plus petits. Dans un souci de simplification, le terme « bloc » sera donc utilisé indifféremment pour désigner un bloc ou un macrobloc. Dans l'exemple représenté, lesdits blocs ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Un tel découpage est effectué par un module PCO de partitionnement représenté à la **figure 5** qui utilise par exemple un algorithme de partitionnement bien connu en tant que tel.

Au cours d'une sous-étape SC2 représentée à la **figure 4****,** le module de codage MCO sélectionne comme bloc courant le premier bloc à coder B₁ de l'image courante Iₙ. Dans le mode préféré de réalisation, la sélection des blocs d'une image est effectuée selon un ordre lexicographique, c'est-à-dire selon un parcours ligne par ligne des blocs, de type « raster-scan », en partant du bloc situé en haut à gauche de l'image jusqu'au bloc situé en bas à droite de l'image.

Au cours d'une sous-étape SC3 représentée à la **figure 4****,** il est procédé au codage prédictif du bloc courant B₁ par des techniques connues de prédiction intra et/ou inter, au cours duquel le bloc B₁ est prédit par rapport à au moins un bloc précédemment codé puis décodé.

En référence à la **figure 5****,** ladite étape de codage prédictif SC3 est mise en œuvre par une unité de codage prédictif UCP qui est apte à effectuer un codage prédictif du bloc courant, selon les techniques de prédiction classiques, telles que par exemple en mode Intra et/ou Inter.

Dans le cas d'un codage prédictif en mode inter, le bloc courant B₁ est prédit par rapport à un bloc issu d'une image précédemment codée et décodée. Dans ce cas, conformément à l'invention, l'image précédemment codée et décodée est une image qui a été obtenue à la suite de l'étape C6 précitée, telle que représentée sur la **figure 1****.**

D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit Bp₁ qui est une approximation du bloc courant B₁. Les informations relatives à ce codage prédictif seront ultérieurement inscrites dans le flux Fₙ transmis au décodeur DO. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO représenté à la **figure 2****.**

Au cours d'une sous-étape SC4 représentée à la **figure 4****,** l'unité de codage prédictif UCP de la **figure 5** procède à la soustraction du bloc prédit Bp₁ du bloc courant B₁ pour produire un bloc résidu Br₁.

Au cours d'une sous-étape SC5 représentée à la **figure 4****,** il est procédé à la transformation du bloc résidu Br₁ selon une opération classique de transformation directe telle que par exemple une transformation en cosinus discrètes de type DCT, pour produire un bloc transformé Bt₁.

Ladite sous-étape SC5 est mise en œuvre par une unité de transformation UT représentée à la **figure 5****.**

Au cours d'une sous-étape SC6 représentée à la **figure 4****,** il est procédé à la quantification du bloc transformé Bt₁ selon une opération classique de quantification, telle que par exemple une quantification scalaire. Un bloc de coefficients quantifiés Bq₁ est alors obtenu.

Ladite sous-étape SC6 est mise en œuvre par une unité de quantification UQ représentée à la **figure 5****.**

Au cours d'une sous-étape SC7 représentée à la **figure 4****,** il est procédé au codage entropique du bloc de coefficients quantifiés Bq₁. Dans le mode préféré de réalisation, il s'agit d'un codage entropique CABAC bien connu de l'homme du métier.

Ladite sous-étape SC7 est mise en œuvre par une unité de codage entropique UCE représentée à la **figure 5****.**

Au cours d'une sous-étape SC8 représentée à la **figure 4****,** il est procédé à la déquantification du bloc Bq₁ selon une opération classique de déquantification, qui est l'opération inverse de la quantification effectuée à la sous-étape SC6. Un bloc de coefficients déquantifiés BDq₁ est alors obtenu.

Ladite sous-étape SC8 est mise en œuvre par une unité de déquantification UDQ représentée à la **figure 5****.**

Au cours d'une sous-étape SC9 représentée à la **figure 4****,** il est procédé à la transformation inverse du bloc de coefficients déquantifiés BDq₁ qui est l'opération inverse de la transformation directe effectuée à la sous-étape SC5 ci-dessus. Un bloc résidu décodé BDr₁ est alors obtenu.

Ladite sous-étape SC9 est mise en œuvre par une unité de transformation inverse UTI représentée à la **figure 5****.**

Au cours d'une sous-étape SC10 représentée à la **figure 4****,** il est procédé à la construction du bloc décodé BD₁ en ajoutant au bloc prédit Bp₁ le bloc résidu décodé BDr₁. Il est à noter que ce dernier bloc est le même que le bloc décodé obtenu à l'issue du procédé de décodage de l'image Iₙ qui sera décrit plus loin dans la description. Le bloc décodé BD₁ est ainsi rendu disponible pour être utilisé par le module de codage MCO.

Ladite sous-étape SC10 est mise en œuvre par une unité de construction UCR représentée à la **figure 5****.**

Les sous-étapes de codage qui viennent d'être décrites ci-dessus sont mises en œuvre pour tous les blocs à coder de l'image courante Iₙ considérée.

### Description détaillée d'un mode de réalisation de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme HEVC.

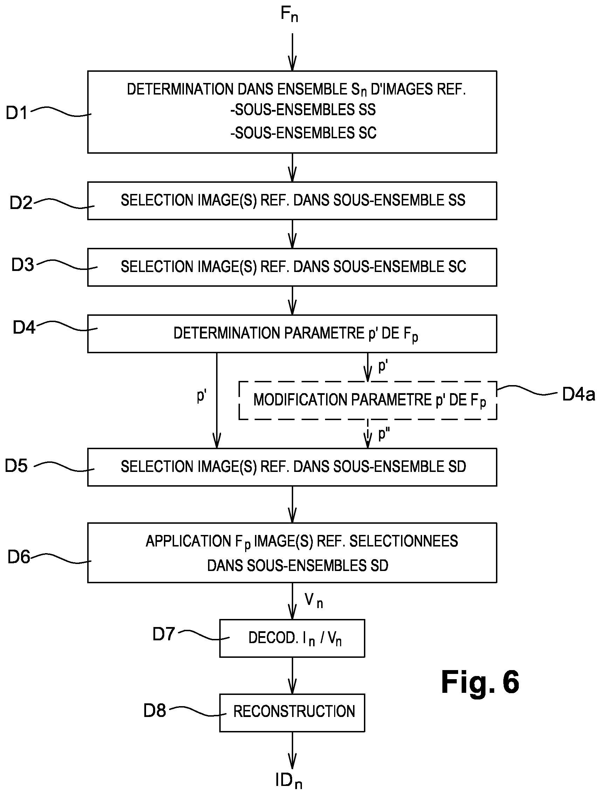

Le procédé de décodage selon l'invention est représenté sous la forme d'un algorithme comportant des étapes D1 à D8 représentées à la **figure 6****.**

Selon le mode de réalisation de l'invention, le procédé de décodage selon l'invention est implémenté dans un dispositif de décodage DO représenté à la **figure 7****.**

Comme illustré en **figure 7****,** un tel dispositif de décodage comprend une mémoire MEM_DO comprenant une mémoire tampon MT_DO, une unité de traitement UT_DO équipée par exemple d'un microprocesseur µP et pilotée par un programme d'ordinateur PG_DO qui met en œuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6** s'applique à toute image courante d'une séquence SI d'images à décoder.

A cet effet, des informations représentatives de l'image courante Iₙ à décoder sont identifiées dans le flux Fₙ reçu au décodeur. A ce stade, un ensemble Sₙ d'images de référence Rₙ₋₁, Rₙ₋₂,..., R_{n-M} est disponible dans la mémoire tampon MT_DO du décodeur DO, comme représenté sur la **figure 7****.** M est une variable entière qui représente le nombre d'images de référence disponibles. En effet, du fait que les ressources de la mémoire tampon MT_DO sont limitées, ce n'est généralement pas la totalité des images de référence de l'ensemble Sₙ qui sont disponibles, mais les M images de référence dernièrement décodées. Dans l'exemple représenté, M=8.

La **figure 3A** illustre la succession desdites M images de référence par rapport à l'image courante Iₙ à décoder, où Rₙ₋₈ est l'image de référence la plus éloignée temporellement de l'image courante Iₙ et où Rₙ₋₁ est l'image de référence la plus proche temporellement de l'image courante.

De façon connue en tant que telle, de telles images de référence sont des images de la séquence SI qui ont été préalablement codées puis décodées. Dans le cas du décodage en Inter selon la norme HEVC, l'image courante Iₙ est décodée à partir d'une ou de plusieurs desdites images de référence.

Conformément à l'invention, lorsqu'une image courante est décodée en Inter, une ou plusieurs desdites images de référence vont être transformées préalablement au décodage en Inter de l'image courante, dans le but d'obtenir respectivement une ou plusieurs images de référence transformées qui soient le plus ressemblantes possible à l'image courante en termes de texture et de mouvement.

La transformation desdites images de référence est effectuée au décodage de façon similaire au codage, en particulier les étapes C1 à C6 représentées à la **figure 1****.**

En référence à la **figure 6****,** il est procédé, au cours d'une étape D1, à la détermination d'un premier sous-ensemble SS d'images de référence, ainsi que d'un deuxième sous-ensemble SC d'images de référence. Une telle étape étant identique à l'étape C1 précitée, elle ne sera pas décrite plus avant.

En référence à la **figure 7****,** ladite étape de détermination D1 est mise en œuvre par un module de calcul CAL1_DO du décodeur DO, lequel module est piloté par le microprocesseur µP de l'unité de traitement UT_DO.

En référence à la **figure 6****,** il est procédé, au cours d'une étape D2, à la sélection d'au moins une image de référence dans le premier sous-ensemble SS d'images de référence déterminé à l'étape D1. Une telle étape étant identique à l'étape C2 précitée, elle ne sera pas décrite plus avant.

En référence à la **figure 7****,** ladite étape de sélection D2 est mise en œuvre par un module de calcul CAL2_DO du décodeur DO, lequel module est piloté par le microprocesseur µP de l'unité de traitement UT_DO.

En référence à la **figure 6****,** il est procédé, au cours d'une étape D3, à la sélection d'au moins une image de référence dans le deuxième sous-ensemble SC d'images de référence déterminé à l'étape D1.

Une telle étape étant identique à l'étape C3 précitée, elle ne sera pas décrite plus avant.

En référence à la **figure 6****,** ladite étape de sélection D3 est mise en œuvre par un module de calcul CAL3_DO du décodeur DO, lequel module est piloté par le microprocesseur µP de l'unité de traitement UT_DO.

En référence à la **figure 6****,** il est procédé, au cours d'une étape D4, à la détermination d'au moins un paramètre p' d'une fonction paramétrique F_{P} prédéterminée qui est adaptée pour transformer un nombre N_{S} d'images de référence sélectionnées dans le premier sous-ensemble SS en une approximation d'un nombre N_{C} d'images de référence sélectionnées dans le deuxième sous-ensemble SC.

En référence à la **figure 7****,** ladite étape de détermination D4 est mise en œuvre par un module de calcul CAL4_DO du décodeur DO, lequel module est piloté par le microprocesseur µP de l'unité de traitement UT_DO.

L'étape D4 étant identique à l'étape C4 précitée, elle ne sera pas décrite plus avant.

En référence à la **figure 6****,** il est procédé, au cours d'une étape D5, à la sélection d'une ou de plusieurs images de référence sur la ou lesquelles appliquer la fonction Fp pour obtenir une ou plusieurs nouvelles images de référence.

L'étape D5 étant identique à l'étape C5 précitée, elle ne sera pas décrite plus avant.

En référence à la **figure 7****,** l'étape de sélection D5 précitée est mise en œuvre par un module de calcul CAL5_DO du décodeur DO, lequel module est piloté par le microprocesseur µP de l'unité de traitement UT_DO.

En référence à la **figure 6****,** il est procédé, au cours d'une étape D6, à l'application à ou aux images sélectionnées dans le troisième sous-ensemble SD, de la fonction F_{P} selon le paramètre p' déterminé à l'étape D4. A l'issue de cette étape D6, une ou plusieurs nouvelles images de référence sont obtenues.

L'étape D6 étant identique à l'étape C6 précitée, elle ne sera pas décrite plus avant.

En référence à la **figure** 7, l'étape d'application D6 est mise en œuvre par un module de calcul CAL6_DO du décodeur DO, lequel module est piloté par le microprocesseur µP de l'unité de traitement UT_DO.

En référence à la **figure 6****,** il est procédé, au cours d'une étape D7, au décodage de l'image courante Iₙ à partir de la ou des nouvelles images de référence obtenues à l'issue de l'étape D6.

En référence à la **figure 7****,** l'étape de décodage D7 est mise en œuvre par un module de décodage MDO du décodeur DO, lequel module est piloté par le microprocesseur µP de l'unité de traitement UT_DO. Le module MDO sera décrit plus loin dans la description.

En référence à la **figure 6****,** il est procédé, au cours d'une étape D8, à la reconstruction d'une image décodée IDₙ.

En référence à la **figure 7****,** l'étape de reconstruction D8 est mise en œuvre par une unité de reconstruction URI qui écrit les blocs décodés dans une image décodée au fur et à mesure que ces blocs deviennent disponibles.

En référence à la **figure 6****,** au cours d'une étape optionnelle de codage D4a représentée en pointillé sur la **figure 6****,** il est procédé à la modification du paramètre p' déterminé à l'étape D4 précitée en un autre paramètre p'" pour tenir compte des images auxquelles il s'applique.

L'étape D4a étant identique à l'étape C4a précitée, elle ne sera pas décrite plus avant.

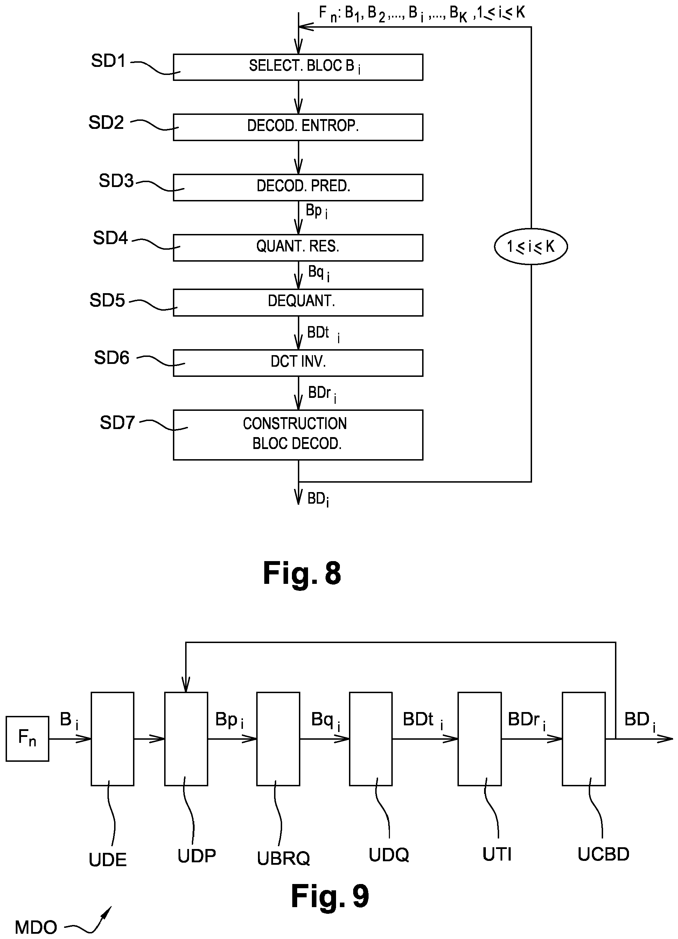

On va maintenant décrire, en référence à la **figure 8****,** les sous-étapes spécifiques de l'étape de décodage D7 de l'image courante Iₙ. De telles sous-étapes spécifiques sont mises en œuvre par le module de décodage MDO de la **figure 7** qui est décrit plus en détail à la **figure 9****.**

Au cours d'une sous-étape SD1 représentée à la **figure 8****,** le module de décodage MDO représenté à la **figure 9** sélectionne comme bloc courant dans le flux Fₙ le premier bloc à décoder B₁.

Au cours d'une sous-étape SD2 représentée à la **figure 8****,** il est procédé au décodage entropique des éléments de syntaxe liés au bloc courant B₁ par lecture du flux Fₙ à l'aide d'un pointeur de flux. Une telle étape consiste principalement à :
- lire les bits contenus au début du flux Fₙ associé au premier bloc codé B₁,
- reconstruire les symboles à partir des bits lus.

Plus précisément, les éléments de syntaxe liés au bloc courant sont décodés par une unité UDE de décodage entropique CABAC tel que représentée à la **figure 9****.** Une telle unité est bien connue en tant que telle et ne sera pas décrite plus avant.

Au cours d'une sous-étape SD3 représentée à la **figure 8****,** il est procédé au décodage prédictif du bloc courant B₁ par des techniques connues de prédiction intra et/ou inter, au cours duquel le bloc B₁ est prédit par rapport à au moins un bloc précédemment décodé.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit Bp₁ par rapport à un bloc issu d'une image précédemment décodée. Dans ce cas, conformément à l'invention, l'image précédemment décodée est une image qui a été obtenue à la suite de l'étape D6 précitée, telle que représentée sur la **figure 6****.**
- Cette étape est mise en œuvre par une unité de décodage prédictif UDP telle que représentée sur la **figure 9****.**

Au cours d'une sous-étape SD4 représentée à la **figure 8****,** il est procédé à la construction d'un bloc résidu quantifié Bq₁ à l'aide des éléments de syntaxe décodés précédemment.

Une telle étape est mise en œuvre par une unité UBRQ de construction de bloc résidu quantifié telle que représentée sur la **figure 9****.**

Au cours d'une sous-étape SD5 représentée à la **figure 8****,** il est procédé à la déquantification du bloc résidu quantifié Bq₁ selon une opération classique de déquantification qui est l'opération inverse de la quantification effectuée à la sous-étape SC6 précitée, pour produire un bloc déquantifié décodé BDt₁.

Ladite sous-étape SD5 est mise en œuvre par une unité de déquantification UDQ représentée à la **figure 9****.**

Au cours d'une sous-étape SD6, il est procédé à la transformation inverse du bloc déquantifié BDt₁ qui est l'opération inverse de la transformation directe effectuée à la sous-étape SC5 précitée. Un bloc résidu décodé BDr₁ est alors obtenu.

Ladite sous-étape SD6 est mise en œuvre par une unité de transformation inverse UTI représentée à la **figure 9****.**

Au cours d'une sous-étape SD7, il est procédé à la construction du bloc décodé BD₁ en ajoutant au bloc prédit Bp₁ le bloc résidu décodé BDr₁. Le bloc décodé BD₁ est ainsi rendu disponible pour être utilisé par le module de décodage MDO de la **figure 9****.**

Ladite sous-étape SD7 est mise en œuvre par une unité UCBD de construction de bloc décodé telle que représentée à la **figure 9****.**

Les sous-étapes de décodage qui viennent d'être décrites ci-dessus sont mises en œuvre pour tous les blocs à décoder de l'image courante Iₙ considérée.

## Revendications

1. Procédé de codage d'au moins une image courante (Iₙ), comprenant les étapes de :
- détermination (C4) d'au moins un paramètre (p', p") d'une fonction paramétrique (F_{P}) prédéterminée, ladite fonction étant apte à transformer les images d'un premier sous-ensemble (SS) d'un ensemble (Sn) d'images de référence préalablement décodées en une approximation des images d'un deuxième sous-ensemble (SC) d'images dudit ensemble (Sₙ) d'images de référence,
- application (C6) de ladite fonction (F_{P}) selon le paramètre (p', p") déterminé à un troisième sous-ensemble (SD) dudit ensemble (Sₙ) d'images de référence, ledit troisième sous-ensemble étant différent dudit premier sous-ensemble, pour obtenir un autre ensemble (SV) d'images de référence préalablement décodées,
- codage (C7) de l'image courante (Iₙ) à partir dudit ensemble (SV) d'images de référence obtenu,
où, pour au moins une image à coder :
- lesdits premier et second sous-ensembles (SS, SC) comprennent respectivement deux images de référence,
- ledit troisième sous-ensemble (SD) comprend les deux images de référence qui sont temporellement les plus proches de l'image courante (In),
- et ledit autre ensemble (SV) d'images de référence obtenu comprend deux images de référence.

2. Procédé de codage selon la revendication 1, au cours duquel ladite étape de détermination d'au moins un paramètre (p', p") est réalisée par maximisation d'un critère de ressemblance prédéterminé entre ladite approximation du deuxième sous-ensemble d'images de référence et ledit deuxième sous-ensemble d'images de référence.

3. Procédé de codage selon l'une quelconque des revendications 1 à 2, au cours duquel ladite étape d'application de la fonction (F_{P}) est mise en œuvre selon un autre paramètre (p"') que ledit paramètre (p', p") déterminé, ledit autre paramètre (p"') étant calculé (C4a) préalablement à partir dudit paramètre (p', p") déterminé.

4. Dispositif de codage (CO) d'au moins une image courante (Iₙ) destiné à mettre en œuvre le procédé de codage selon l'une quelconque des revendications 1 à 4, comprenant :
- des moyens (CAL4_CO) de détermination d'au moins un paramètre (p') d'une fonction paramétrique (F_{P}) prédéterminée, ladite fonction étant apte à transformer les images d'un premier sous-ensemble (SS) d'un ensemble (Sₙ) d'images de référence préalablement décodées en une approximation des images d'un deuxième sous-ensemble (SC) d'images dudit ensemble (Sₙ) d'images de référence,
- des moyens (CAL6_CO) d'application de ladite fonction (F_{P}) selon le paramètre (p') déterminé à un troisième sous-ensemble (SD) dudit ensemble (Sₙ) d'images de référence, ledit troisième sous-ensemble étant différent dudit premier sous-ensemble, pour obtenir un autre ensemble (SV) d'images de référence préalablement décodées,
- des moyens (MCO) de codage de l'image courante (Iₙ) à partir dudit ensemble (SV) d'images de référence obtenu,
où, pour au moins une image à coder :
- lesdits premier et second sous-ensembles (SS, SC) comprennent respectivement deux images de référence,
- ledit troisième sous-ensemble (SD) comprend les deux images de référence qui sont temporellement les plus proches de l'image courante (In),
- et ledit autre ensemble (SV) d'images de référence obtenu comprend deux images de référence.

5. Programme d'ordinateur comportant des instructions pour mettre en œuvre le procédé de codage selon l'une quelconque des revendications 1 à 3, lorsqu'il est exécuté sur un ordinateur.

6. Support d'enregistrement lisible par un ordinateur sur lequel est enregistré un programme d'ordinateur comprenant des instructions pour l'exécution des étapes du procédé de codage selon l'une quelconque des revendications 1 à 3, lorsque ledit programme est exécuté par un ordinateur.

7. Procédé de décodage d'une image courante codée, comprenant les étapes de :
- détermination (D4) d'au moins un paramètre (p', p") d'une fonction paramétrique (F_{P}) prédéterminée, ladite fonction étant apte à transformer les images d'un premier sous-ensemble (SS) d'un ensemble (Sₙ) d'images de référence préalablement décodées en une approximation des images d'un deuxième sous-ensemble (SC) d'images dudit ensemble (Sₙ) d'images de référence,
- application (D6) de ladite fonction (F_{P}) selon le paramètre (p', p") déterminé à un troisième sous-ensemble (SD) dudit ensemble (Sₙ) d'images de référence, ledit troisième sous-ensemble étant différent dudit premier sous-ensemble, pour obtenir un autre ensemble (SV) d'images de référence préalablement décodées,
- décodage (D7) de l'image courante (Iₙ) à partir dudit ensemble (SV) d'images de référence obtenu,
où, pour au moins une image à décoder :
- lesdits premier et second sous-ensembles (SS, SC) comprennent respectivement deux images de référence,
- ledit troisième sous-ensemble (SD) comprend les deux images de référence qui sont temporellement les plus proches de l'image courante (In),
- et ledit autre ensemble (SV) d'images de référence obtenu comprend deux images de référence.

8. Procédé de décodage selon la revendication 7, au cours duquel ladite étape de détermination d'au moins un paramètre (p', p") est réalisée par maximisation d'un critère de ressemblance prédéterminé entre ladite approximation du deuxième sous-ensemble d'images de référence et ledit deuxième sous-ensemble d'images de référence.

9. Procédé de décodage selon l'une quelconque des revendications 7 à 8, au cours duquel ladite étape d'application de la fonction (F_{P}) est mise en œuvre selon un autre paramètre (p"') que ledit paramètre (p', p") déterminé, ledit autre paramètre (p"') étant calculé préalablement à partir dudit paramètre (p', p") déterminé.

10. Dispositif (DO) de décodage d'une image courante codée, destiné à mettre en œuvre le procédé de décodage selon l'une quelconque des revendications 8 à 11, comprenant :
- des moyens (CAL4_DO) de détermination d'au moins un paramètre (p') d'une fonction paramétrique (F_{P}) prédéterminée, ladite fonction étant apte à transformer les images d'un premier sous-ensemble (SS) d'un ensemble (Sₙ) d'images de référence préalablement décodées en une approximation des images d'un deuxième sous-ensemble (SC) d'images dudit ensemble (Sₙ) d'images de référence,
- des moyens (CAL6_DO) d'application de ladite fonction (F_{P}) selon le paramètre (p') déterminé à un troisième sous-ensemble (SD) dudit ensemble (Sₙ) d'images de référence, ledit troisième sous-ensemble étant différent dudit premier sous-ensemble, pour obtenir un autre ensemble (SV) d'images de référence préalablement décodées,
- des moyens (MDO) de décodage de l'image courante (Iₙ) à partir dudit ensemble (SV) d'images de référence obtenu,
où, pour au moins une image à décoder :
- lesdits premier et second sous-ensembles (SS, SC) comprennent respectivement deux images de référence,
- ledit troisième sous-ensemble (SD) comprend les deux images de référence qui sont temporellement les plus proches de l'image courante (In),
- et ledit autre ensemble (SV) d'images de référence obtenu comprend deux images de référence.

11. Programme d'ordinateur comportant des instructions pour mettre en œuvre le procédé de décodage selon l'une quelconque des revendications 7 à 9, lorsqu'il est exécuté sur un ordinateur.

12. Support d'enregistrement lisible par un ordinateur sur lequel est enregistré un programme d'ordinateur comprenant des instructions pour l'exécution des étapes du procédé de décodage selon l'une quelconque des revendications 7 à 9, lorsque ledit programme est exécuté par un ordinateur.

## Patentansprüche

1. Verfahren zur Codierung mindestens eines aktuellen Bilds (Iₙ), das die folgenden Schritte beinhaltet:
- Bestimmen (C4) mindestens eines Parameters (p', p") einer vorgegebenen parametrischen Funktion (F_{P}), wobei die Funktion fähig ist, die Bilder eines ersten Teilsatzes (SS) eines Satzes (Sn) von zuvor decodierten Referenzbildern in eine Approximation der Bilder eines zweiten Teilsatzes (SC) von Bildern des Satzes (Sₙ) von Referenzbildern zu transformieren,
- Anwenden (C6) der Funktion (F_{P}) gemäß dem bestimmten Parameter (p', p") auf einen dritten Teilsatz (SD) des Satzes (Sₙ) von Referenzbildern, wobei sich der dritte Teilsatz von dem ersten Teilsatz unterscheidet, um einen anderen Satz (SV) von zuvor decodierten Referenzbildern zu erhalten,
- Codieren (C7) des aktuellen Bilds (Iₙ) anhand des erhaltenen Satzes (SV) von Referenzbildern,
wobei für mindestens ein zu codierendes Bild:
- der erste und der zweite Teilsatz (SS, SC) jeweils zwei Referenzbilder beinhalten,
- der dritte Teilsatz (SD) die zwei Referenzbilder beinhaltet, die dem aktuellen Bild (In) zeitlich am nächsten sind,
- und der andere erhaltene Satz (SV) von Referenzbildern zwei Referenzbilder beinhaltet.

2. Codierungsverfahren nach Anspruch 1, bei dem der Schritt des Bestimmens mindestens eines Parameters (p', p") durch eine Maximierung eines vorgegebenen Ähnlichkeitskriteriums zwischen der Approximation des zweiten Teilsatzes von Referenzbildern und dem zweiten Teilsatz von Referenzbildern durchgeführt wird.

3. Codierungsverfahren nach einem der Ansprüche 1 bis 2, bei dem der Schritt des Anwendens der Funktion (F_{P}) gemäß einem anderen Parameter (p"') als dem bestimmten Parameter (p', p") implementiert wird, wobei der andere Parameter (p"') zuvor anhand des bestimmten Parameters (p', p") berechnet (C4a) wird.

4. Vorrichtung zur Codierung (CO) mindestens eines aktuellen Bilds (Iₙ), die dazu bestimmt ist, das Codierungsverfahren nach einem der Ansprüche 1 bis 3 zu implementieren, und die Folgendes beinhaltet:
- Mittel (CAL4_CO) zum Bestimmen mindestens eines Parameters (p') einer vorgegebenen parametrischen Funktion (F_{P}), wobei die Funktion fähig ist, die Bilder eines ersten Teilsatzes (SS) eines Satzes (Sₙ) von zuvor decodierten Referenzbildern in eine Approximation der Bilder eines zweiten Teilsatzes (SC) von Bildern des Satzes (Sₙ) von Referenzbildern zu transformieren,
- Mittel (CAL6_CO) zum Anwenden der Funktion (F_{P}) gemäß dem bestimmten Parameter (p') auf einen dritten Teilsatz (SD) des Satzes (Sₙ) von Referenzbildern, wobei sich der dritte Teilsatz von dem ersten Teilsatz unterscheidet, um einen anderen Satz (SV) von zuvor decodierten Referenzbildern zu erhalten,
- Mittel (MCO) zum Codieren des aktuellen Bilds (Iₙ) anhand des erhaltenen Satzes (SV) von Referenzbildern,
wobei für mindestens ein zu codierendes Bild:
- der erste und der zweite Teilsatz (SS, SC) jeweils zwei Referenzbilder beinhalten,
- der dritte Teilsatz (SD) die zwei Referenzbilder beinhaltet, die dem aktuellen Bild (In) zeitlich am nächsten sind,
- und der andere erhaltene Satz (SV) von Referenzbildern zwei Referenzbilder beinhaltet.

5. Computerprogramm, das Anweisungen zum Implementieren des Codierungsverfahrens nach einem der Ansprüche 1 bis 3 umfasst, wenn es auf einem Computer ausgeführt wird.

6. Computerlesbares Aufzeichnungsmedium, auf dem ein Computerprogramm aufgezeichnet ist, das Anweisungen zum Ausführen der Schritte des Codierungsverfahrens nach einem der Ansprüche 1 bis 3 beinhaltet, wenn das Programm durch einen Computer ausgeführt wird.

7. Verfahren zur Decodierung eines codierten aktuellen Bilds, das die folgenden Schritte beinhaltet:
- Bestimmen (D4) mindestens eines Parameters (p', p") einer vorgegebenen parametrischen Funktion (F_{P}), wobei die Funktion fähig ist, die Bilder eines ersten Teilsatzes (SS) eines Satzes (Sₙ) von zuvor decodierten Referenzbildern in eine Approximation der Bilder eines zweiten Teilsatzes (SC) von Bildern des Satzes (Sₙ) von Referenzbildern zu transformieren,
- Anwenden (D6) der Funktion (F_{P}) gemäß dem bestimmten Parameter (p', p") auf einen dritten Teilsatz (SD) des Satzes (Sₙ) von Referenzbildern, wobei sich der dritte Teilsatz von dem ersten Teilsatz unterscheidet, um einen anderen Satz (SV) von zuvor decodierten Referenzbildern zu erhalten,
- Decodieren (D7) des aktuellen Bilds (Iₙ) anhand des erhaltenen Satzes (SV) von Referenzbildern,
wobei für mindestens ein zu decodierendes Bild:
- der erste und der zweite Teilsatz (SS, SC) jeweils zwei Referenzbilder beinhalten,
- der dritte Teilsatz (SD) die zwei Referenzbilder beinhaltet, die dem aktuellen Bild (In) zeitlich am nächsten sind,
- und der andere erhaltene Satz (SV) von Referenzbildern zwei Referenzbilder beinhaltet.

8. Decodierungsverfahren nach Anspruch 7, bei dem der Schritt des Bestimmens mindestens eines Parameters (p', p") durch eine Maximierung eines vorgegebenen Ähnlichkeitskriteriums zwischen der Approximation des zweiten Teilsatzes von Referenzbildern und dem zweiten Teilsatz von Referenzbildern durchgeführt wird.

9. Decodierungsverfahren nach einem der Ansprüche 7 bis 8, bei dem der Schritt des Anwendens der Funktion (F_{P}) gemäß einem anderen Parameter (p"') als dem bestimmten Parameter (p', p") implementiert wird, wobei der andere Parameter (p"') zuvor anhand des bestimmten Parameters (p', p") berechnet wird.

10. Vorrichtung (DO) zur Decodierung eines codierten aktuellen Bilds, die dazu bestimmt ist, das Decodierungsverfahren nach einem der Ansprüche 8 bis 11 zu implementieren, und die Folgendes beinhaltet:
- Mittel (CAL4_DO) zum Bestimmen mindestens eines Parameters (p') einer vorgegebenen parametrischen Funktion (F_{P}), wobei die Funktion fähig ist, die Bilder eines ersten Teilsatzes (SS) eines Satzes (Sₙ) von zuvor decodierten Referenzbildern in eine Approximation der Bilder eines zweiten Teilsatzes (SC) von Bildern des Satzes (Sₙ) von Referenzbildern zu transformieren,
- Mittel (CAL6_DO) zum Anwenden der Funktion (F_{P}) gemäß dem bestimmten Parameter (p') auf einen dritten Teilsatz (SD) des Satzes (Sₙ) von Referenzbildern, wobei sich der dritte Teilsatz von dem ersten Teilsatz unterscheidet, um einen anderen Satz (SV) von zuvor decodierten Referenzbildern zu erhalten,
- Mittel (MDO) zum Decodieren des aktuellen Bilds (Iₙ) anhand des erhaltenen Satzes (SV) von Referenzbildern,
wobei für mindestens ein zu decodierendes Bild:
- der erste und der zweite Teilsatz (SS, SC) jeweils zwei Referenzbilder beinhalten,
- der dritte Teilsatz (SD) die zwei Referenzbilder beinhaltet, die dem aktuellen Bild (In) zeitlich am nächsten sind,
- und der andere erhaltene Satz (SV) von Referenzbildern zwei Referenzbilder beinhaltet.

11. Computerprogramm, das Anweisungen zum Implementieren des Decodierungsverfahrens nach einem der Ansprüche 7 bis 9 umfasst, wenn es auf einem Computer ausgeführt wird.

12. Computerlesbares Aufzeichnungsmedium, auf dem ein Computerprogramm aufgezeichnet ist, das Anweisungen zum Ausführen der Schritte des Decodierungsverfahrens nach einem der Ansprüche 7 bis 9 beinhaltet, wenn das Programm durch einen Computer ausgeführt wird.

## Claims

1. Method for coding at least one current image (Iₙ), comprising steps of:
- determining (C4) at least one parameter (p', p") of a preset parametric function (F_{P}), said function being able to convert the images of a first subset (SS) of a set (Sn) of previously decoded reference images into an approximation of the images of a second subset (SC) of images of said set (Sₙ) of reference images,
- applying (C6) said function (F_{P}) parameterized with the determined parameter (p', p") to a third subset (SD) of said set (Sₙ) of reference images, said third subset being different from said first subset, to obtain another set (SV) of previously decoded reference images,
- coding (C7) the current image (Iₙ) on the basis of said obtained set (SV) of reference images,
wherein, for at least one image to be coded:
- said first and second subsets (SS, SC) respectively comprise two reference images,
- said third subset (SD) comprises the two reference images that are temporally closest to the current image (In),
- and said other obtained set (SV) of reference images comprises two reference images.

2. Coding method according to Claim 1, in which said step of determining at least one parameter (p', p") is carried out by maximizing a preset criterion of resemblance between said approximation of the second subset of reference images and said second subset of reference images.

3. Coding method according to either one of Claims 1 and 2, in which said step of applying the function (F_{P}) is implemented using a parameter (p"') other than said determined parameter (p', p"), said other parameter (p"') being computed (C4a) beforehand from said determined parameter (p', p").

4. Device (CO) for coding at least one current image (Iₙ), said device being intended to implement the coding method according to any one of Claims 1 to 3, comprising:
- means (CAL4_CO) for determining at least one parameter (p') of a preset parametric function (F_{P}), said function being able to convert the images of a first subset (SS) of a set (Sn) of previously decoded reference images into an approximation of the images of a second subset (SC) of images of said set (Sn) of reference images,
- means (CAL6_CO) for applying said function (F_{P}) parameterized with the determined parameter (p') to a third subset (SD) of said set (Sn) of reference images, said third subset being different from said first subset, to obtain another set (SV) of previously decoded reference images,
- means (MCO) for coding the current image (Iₙ) on the basis of said obtained set (SV) of reference images,
wherein, for at least one image to be coded:
- said first and second subsets (SS, SC) respectively comprise two reference images,
- said third subset (SD) comprises the two reference images that are temporally closest to the current image (In),
- and said other obtained set (SV) of reference images comprises two reference images.

5. Computer program containing instructions for implementing the coding method according to any one of Claims 1 to 3, when it is executed on a computer.

6. Computer-readable storage medium on which is stored a computer program containing instructions for the execution of the steps of the coding method according to any one of Claims 1 to 3, when said program is executed by a computer.

7. Method for decoding at least one coded current image, comprising steps of:
- determining (D4) at least one parameter (p', p") of a preset parametric function (F_{P}), said function being able to convert the images of a first subset (SS) of a set (Sn) of previously decoded reference images into an approximation of the images of a second subset (SC) of images of said set (Sn) of reference images,
- applying (D6) said function (Fp) parameterized with the determined parameter (p', p") to a third subset (SD) of said set (Sn) of reference images, said third subset being different from said first subset, to obtain another set (SV) of previously decoded reference images,
- decoding (D7) the current image (Iₙ) on the basis of said obtained set (SV) of reference images,
wherein, for at least one image to be decoded:
- said first and second subsets (SS, SC) respectively comprise two reference images,
- said third subset (SD) comprises the two reference images that are temporally closest to the current image (In),
- and said other obtained set (SV) of reference images comprises two reference images.

8. Decoding method according to Claim 7, in which said step of determining at least one parameter (p', p") is carried out by maximizing a preset criterion of resemblance between said approximation of the second subset of reference images and said second subset of reference images.

9. Decoding method according to either one of Claims 7 and 8, in which said step of applying the function (F_{P}) is implemented using a parameter (p"') other than said determined parameter (p', p"), said other parameter (p"') being computed beforehand from said determined parameter (p', p").

10. Device (DO) for decoding a coded current image, said device being intended to implement the decoding method according to any one of Claims 8 to 11, comprising:
- means (CAL4_DO) for determining at least one parameter (p') of a preset parametric function (F_{P}), said function being able to convert the images of a first subset (SS) of a set (Sn) of previously decoded reference images into an approximation of the images of a second subset (SC) of images of said set (Sn) of reference images,
- means (CAL6_DO) for applying said function (F_{P}) parameterized with the determined parameter (p') to a third subset (SD) of said set (Sn) of reference images, said third subset being different from said first subset, to obtain another set (SV) of previously decoded reference images,
- means (MDO) for decoding the current image (Iₙ) on the basis of said obtained set (SV) of reference images,
wherein, for at least one image to be decoded:
- said first and second subsets (SS, SC) respectively comprise two reference images,
- said third subset (SD) comprises the two reference images that are temporally closest to the current image (In),
- and said other obtained set (SV) of reference images comprises two reference images.

11. Computer program containing instructions for implementing the decoding method according to any one of Claims 7 to 9, when it is executed on a computer.

12. Computer-readable storage medium on which is stored a computer program containing instructions for the execution of the steps of the decoding method according to any one of Claims 7 to 9, when said program is executed by a computer.
